# EUROPEAN PATENT APPLICATION

(11) **EP 1 416 751 A1**
(43) Date of publication of application: **06.05.2004**
(21) Application number: 02360291.5
(22) Date of filing: 22.10.2002
(51) Int. Cl.: H04Q 7/34, H04Q 7/32

(54) **Method and devices for providing event information of a mobile application**

(71) Applicant: Nextenso, 75008 Paris (FR)
(72) Inventor: Dupont, Marc, 76220 Dampierre en Bray (FR); Barre, François, 76130 Mont Saint Aignan (FR); Demathieu, Jean-Georges, 92340 Bourg-La-Reine (FR)
(74) Representative: Rausch, Gabriele, Dr.

(57) **Abstract**

A Method for providing event information of a mobile application, in particular of a mobile applications executed on a mobile phone, to a server comprising the steps of:
- generating of event information with respect to the mobile application by the respective mobile application
- storing the event information in an event database at the mobile phone
- generating a communication stream comprising event database information, and
- transferring the communication stream to a server over a radio communication and by using the mobile phone. A mobile phone, a server, a communication system and a software program product are adapted for carrying out the method

## Description

### Field of the Invention

The invention relates to a method of providing event information related to mobile applications over a wireless communication system as well as a mobile station and server for executing the method.

The invention also relates more specifically to a method for evaluating the functionality of mobile applications of a mobile phone as well as a mobile phone and server for executing the method. The evaluating of the functionality in particular comprises an analysis of the user behaviour as well as an error analysis caused by the user or application bugs.

### Background of the Invention

In recent years the progress in the development of mobile communication systems has led to improved communication possibilities and services and also has opened new services like mobile internet accesses, location-based services, multimedia messaging and so on.

In this context mobile phones have become more and more sophisticated and provide a higher functionality to the user. Therefore, today mobile phones usually comprise several mobile application programs, in the following called mobile applications, executed on a mobile phone for providing different functionality.

For example, today mobile phones provides among several mobile applications related to the voice communication, applications like a browser for accessing the internet, office applications like address books or telephone books, organisers and alarm clocks, applications to adjust user setting or user profiles, applications providing calling lists, applications for handling ring tones or logos, applications for messaging, like text messaging, in particular Short Message Service (SMS) which is recently extended to multimedia messaging, applications for entertainment like games or applications for playing music, application for supporting accessories devices like head sets, car kits etc.

There is a desire of providing information related to the mobile application, in particular indicative of user behaviour or of the technical operation of mobile applications.

Today, service provider and mobile application provider cannot quantify the manner and reason a mobile application is used, and the technical operation of a mobile application. Thus, service provider, application developer etc. are missing such information which are very useful for improving theirs products and services.

In connection with computer operating systems and computer networks methods and application are known for tracing and managing network issues. The respective computer equipment for example typically comprises a Management Information Database (MIB) for logging event information, and agents that providing the MIB information for subsequent evaluating by respective applications. A so called Simple Network Management Protocol (SNMP) is used for transmitting the MIB information.

Mobile phones have not enough memory space and computing resources to implement MIB databases and SNMP protocols.

Today mobile phones do not store event information related to mobile applications. Merely, some error messages related to the electronic equipment of the mobile phone are stored in a local database of a mobile phone. These error information are never send to a service provider or application provider and might by only evaluated in case of the mobile phone is being repaired.

Throughout this specification including in the claims, the expression "mobile application" denotes application or a subroutine of an application running in particular on a mobile phone. Furthermore, it includes applications on the mobile phone terminal, like graphical navigation, and applications on peripherals, such as SIM browser, horoscope, dating on the SIM card or distributed fleet management application where one mobile phone can track other mobile phones or peripheral devices connected with the mobile phone. Peripheral devices are for example a laptop, a PDA, music player, car kit accessory equipment or a camera.

Service Level (SL) stands for the benefits, drawbacks and quality of a mobile application as perceived by the user and the fit between the operator target market and the user.

Service Level (SL) Measurements is the evaluating of the event information for analysing the functionality of a mobile application. The analyses and it results are made by the Service Level (SL) application on a server based on the event information collected and provided through the method according to the invention.

A Service Provider means not only the provider of a radio telecommunication service that can benefit from SL information about mobile applications. It may also include the operator of the network, the mobile application provider and the contractors, integrators and partners, e.g. SIM card manufacturer hired by the operator.

Throughout this specification including the claims, the expression "event information" denotes in general information with respect to events of a mobile application that are of benefit to the Service Provider for evaluating the Service Level of a mobile application, i.e. carrying out the SL Measurements. Event information is in particular
- errors found by a mobile application while accessing resources of the SIM-card, terminal, and/or the battery of the mobile phone or in a connected device like a laptop or PDA, or during telecommunication, e.g. failure to send an SMS, or in the interaction of the user with the mobile application, e.g. detection of user's aborted menu navigation, or in the logic of the mobile application itself, e.g. applicative case not handled, or in the network planning, e.g. overlapping of BTS channels or
- information describing how the mobile application is used so that a Service Provider can modify the mobile application correspondingly. Examples include detection of user difficulties in menu navigation, illegal input etc.

### Summary of the Invention

It is therefore an object of the present invention to provide a method for providing event information with respect to mobile applications to a server over a radio communication system as well as a mobile phone, a server, a communication system and a software program product for executing the method.

This objects are achieved by a method according to claim 1, a mobile phone according to claim 14, a server according to claim 15, a communication system according to claim 16 and a software program product according to claim 17 and 20.

A basic idea of the invention is that a mobile application capture event information and a Federator application, which is a software executed at the mobile phone, handle these event information for providing to a server. At a server a software, called SL application, computes the SL Measurements and generates reports and alerts for use by Service Providers. The capture of the event information by the mobile application and the handling of the event information by the Federator application are done preferably in such a way as to:
- minimise memory usage on the mobile phone or SIM-card,
- minimise the execution time spent by Mobile Applications in the capture of event information,
- minimise network traffic,
- maximise the benefits of SL Measurements to the Service Providers,
- protect the confidentiality of the Service Providers,
- allow Service Provider to define new Event types.

Further objects advantages and developments of the invention are apparent from the description and the accompanying drawings.

It is to be understood that the aforementioned features and the features explained below can be used not only in the respective combinations described but also in other combinations or alone without departing from the scope of the present invention.

### Brief Description of the Drawings

The invention will become more apparent from the following description of an embodiment taken in conjunction with the accompanying drawings, in which:

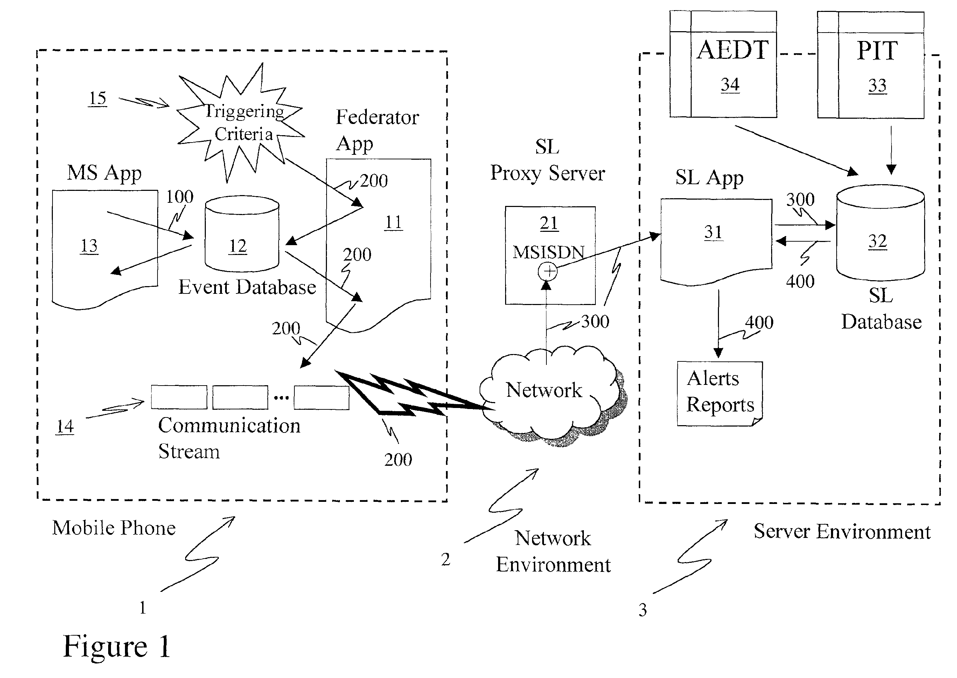

Fig. 1 shows a schematic illustration of an embodiment of the invention.

### Detailed Description of the Invention

Figure 1 shows a schematic illustration of an embodiment of the invention. A mobile phone 1 is connected via radio communication network 2 to server 3.

The mobile phone 1, the radio communication network 2 and the server 3 are part of a radio communication system. The radio communication system is preferably a radio telecommunication system like a GSM, EDGE, GPRS or UMTS telecommunication systems, which is used for executing the method according to the invention. The radio communication system could also be a wireless LAN-network, Wi-Fi (Wireless Fidelity) or Blue Tooth system, wherein the common mobile phone functions, i.e. telephone calls and/or data transmissions are executed via a telecommunication system, but the method according to the invention, i.e. the providing of event information of a mobile application is executed via the wireless LAN-network, Wi-Fl (Wireless Fidelity) or Blue Tooth system. The general architecture of radio communication systems is well known by a person skilled in the art and therefore it is not described herein in detail.

A radio telecommunication system comprises for example at least a mobile phone 1, which is connected over a (not shown) radio or air interface to a (not shown) base station (in GMS terminology) or a node B in terms of UMTS. The base station itself is connected to a (not shown) Mobile Switching Centre (MSC), or a Radio Network Controller in terms of UMTS. The MSC provides a connection to a (not shown) core network like a ISDN network or a PSTN network. The used technical terms are well known for persons skilled in the art and could be looked up in respective documents, for example for GSM in ETSI TC-SMG GSM 01.04, "Abbreviations and Acronyms".

The radio communication network 2 of figure 1 comprises as an example the (not shown) Base Station and MSC. Furthermore, in figure 1 a Service Level Proxy Server (SL Proxy Server) 21, which functions will described later in this specification, is shown as part of a network environment. The SL Proxy Server is in particular connected with a gateway (such as SMS gateway, not shown), which is connected to the network through another module (such as SMS-C, RAN or GGSN) which is connected to the (not shown) MSC. Reference number 3 denotes a server or a server environment respectively, having a Service Level Application (SL App) 31, which functions will described later in this specification. Although, the SL Proxy Server 21 is shown as part of a network environment, is may reside to the network environment 2 or server environment 3. The SL Proxy Server 21 and the SL App 31 can be implemented on the same hardware and even in the same application. Their separation in different applications has the advantage, that it allows a more flexible business model (different vendors) and the ability for the operator to hide events descriptions from the provider of a software program product for the mobile phone, i.e. of a Federator App. and a event database. (operator confidentiality).

The mobile phone 1 according to the present invention, is a common mobile phone for using with a radio communication system, having in addition a so called Federator Application (Federator App) 11, which is software executed at the mobile phone 1, and an Event Database (ED) 12. The Federator App 11 and/or the Event Database 12 are preferably stored on a (not shown) memory of the mobile phone 1 and/or on memory of a (not shown) SIM-card. Of course, a software program product of the Federator App.11, provided for a mobile phone or a SIM-card, could comprise the Event Database 12 itself. Reference number 13 denotes a Mobile Application (MS App) which functionality is to be evaluated. The MS App 13 differs from common Mobile Application in its capability to generate Event Information, preferable in form of a Event Code, with respect to action executed by the MS App 13. The Event Code is for example a numeric or alphanumeric code. Event information is information with respect to an event or activity of a mobile application, in particular errors found by a mobile application or information describing how the mobile application is used. The event information is for example information for detecting problems in:
- SIM cards, e.g. the terminal profile is 12 bits long but the SIM card returns only 10 bits to the SIM application,
- Application environment, e.g. the SIM browser function "display menu" does not return,
- Application, e.g. an application variable has illegal value
- Terminal, e.g. NMR is not supported
- Electronics equipment connected to the terminal, e.g. laptops from manufacturer A do not inter-operate with cell phones of manufacturer B,
- User-application interaction, e.g. user went through 2 levels of menus 5 times without ever selecting any service; user entered the same illegal input 4 times
- Location, timing and dropped frames information can be added to detect problems related to network planning, e.g. overlapping BTS channels, zones without coverage, and communication, e.g.: overloaded SMS-C.

The MS App 13 according to the invention is in general a MS App of the mobile phone 1. An application on a SIM card is considered as an application of the mobile phone. It is to be noted, that the MS App 13 must not necessarily be located at the mobile phone. Within the scope of invention is also an application executed on a device connected to the mobile phone, like an PDA or accessory devices of the mobile phone, like a car kit, a camera or a music player. The device could be wired connected to the mobile phone or wireless connected, i.e. by infrared, Blue Tooth or Wi-Fi ( Wireless Fidelity) interfaces, wherein the Event Information or the Event Codes are transmitted over the aforementioned connection the mobile phone, in particular to its Federator App. 11.

The Event Database (ED) 12 is a preferably small data base at the mobile phone 1 for Event Information, preferably in form of Event Codes captured or generated by the MS App 13.

The Event Database comprises at least the following fields:
- an Application Identification (App ID) field,
- an Event Code field and
- a field for counting the number of events for the associated Event Code.

The Event Database only needs to be a simple list. The App ID field is a number characterizing each MS App 13 from among all the applications of all mobile application providers.

In a preferred embodiment, the App ID field is made of a MA Provider ID and a Provider App ID in order to create a simple process for creation of characteristic application and module identifications. The MA Provider ID a number characterizing each mobile application provider or mobile phone component provider participating in the gathering of Events (e.g.: SIM manufacturer). The Provider App ID is a number characterizing each MS App 13 among the providers' mobile applications. The process of creation of characteristic application and module identification is the following: the provider of the software product for executing the method attributes a characteristic number to each mobile application or module provider participating in Event gathering. Then, said provider creates its own numbering scheme for its applications. Remark: the numbering of hardware modules is done through the Pack ID described later.

As mentioned before, the Event Database is for example a simple list of this fields or a table with corresponding columns. In a preferred embodiment of the invention the event database also comprises a Pack ID, which will later be described in more detail. Then, the event database is, for example, a table with four columns standing for the Event Code, Event Counter, App ID and Pack ID. The Event Code could be realised by assigning each line or row of the table a specific Event Code, which saved a column of the table if there is only one MA provider (because each MA provider has its own Event Codes). Of course, the App ID and the Pack Id could also be combined into a unique code, stored in the event database.

The Federator App 11 is an application on the mobile phone for at least generating a Communication Stream 14. Preferable, the Federator App 11 stores Event Codes at the Event Database 12 and sends the Communication Stream to the server 3, in particular to the SL App. 31.

In general the Federator App. 11 could be considered as in charge of handling the Event Information, e.g. generating and at least causing a sending of the Communication Stream 14 to the Server or Server Environment, and as a preferred option storing the events in the Event Database. The Federator app 11 comprises a so called Fed_Store_Event function and a communication Stream packaging and sending routine.

The Fed_Store_Event function is called by Mobile Applications, for example the MS App 13 with the following parameters:
- App ID
- Event Code

It is to be noted that the storing function for storing Event Information or Event Code as described before must not necessarily realised by the Federator App 11. The Fed_Store_Event function is provided as an abstraction mechanism so the provider of the software product for executing the method can update the structure of the Event Database. The MS App 13 could also write directly to the Event Database, as indicated also be the arrows of figure 1. This could be done with method known by person skilled in the art.

In a preferred embodiment of the invention, the mobile application transmits in addition a Pack ID parameter. The Pack ID is a unique Pack identifier for each Pack of Mobile Application or component provider. The function of the Pack ID is described later with respect to SL App 31 of the server 3.

The Communication Stream packaging and sending routine creates and preferably sends the Communication Stream. This routine clears the Event Database when the communication is successful.

The routine is started by the specific triggering criteria. The triggering is carried out for example for one or the following four criteria:
- at specific dates and times, through a timer mechanism which is usually available in today mobile phones,
- in response to a specific memory status of the database, e.g. if the database is full or almost full. This is preferably detected by Fed_Store_Event which starts this routine.
- in response to a specific Event chosen for its importance by the service provider, e.g. the user presses the SOS key repeatedly, or the mobile application tries to communicate with its server without success
- in response to a request of a server.

The first three triggering criteria can be set during the manufacturing phase in co-operation with Service Providers and could also include the possibility to be modified by download from the SL Proxy Server.

The request is a cyclical or non-cyclical interrogation of the Federator App 11 by the SL Proxy Server 21 or the server, e.g. the SL application 31, which will be later described in more detail, to force the update of the SL Database for the immediate creation of new reports and alerts. This mechanism allows to track events without waiting on the triggering of the preceding criteria.

The last criteria defines a kind of a of priority rule, what is done in case of critical errors with the collected event information.

In a preferred embodiment (called an Enhanced SL Mechanism), the routine can perform a location request to a location module on the mobile phone and include it in the packaging of the Communication Stream.

As mentioned before, the Federator App 11 generates the Communication Stream 14. The Communication Stream 14 is a set of communication frames created by the Federator App 11 capturing the content of the Event Database 12 and sent to the SL Proxy Server 21 or to SL App 31.

In a basic implementation, there is only one SL Proxy Server 21 or SL App 31 for all cell phones of an operator. As part of a distributed embodiment, the Federator App 11 of different mobile phones or for different MS Apps 13 communicates with different SL Proxy Servers 21 or SL Apps 31, potentially using different communication channels (e.g.:GSM, Wi-Fi, Bluetooth), for scalability and manageability reasons. For example, the Federator App 11 sends all Events related to MS Apps 13 of provider A to an SL App 31 hosted by provider A using WAP, and all others to an SL App 31 on operator premises using SMS.

A communication frame comprises the following information:
- MSISDN (optional, for an Enhanced SL Mechanism of a preferred embodiment)
- Communication Frame Number (optional, for an Enhanced SL Mechanism of a preferred embodiment)
- the Federator App version (optional, for an Enhanced SL Mechanism of a preferred embodiment)
and a series of:
-
- Pack ID (optional; for an Enhanced SL Mechanism of a preferred embodiment)
- App ID
and Series of Events with:
- Event code
- Counter of number of the events

The Frame number is used for frame losses. All frames part of a communication stream are numbered so any frame loss can be detected, captured and processed by the SL Proxy Server 21 or the SL App 31 as another Event.

In a preferred embodiment of the invention with an Enhanced SL Mechanism, when only hardware information is passed (e.g. SIM card description with no application from the SIM vendor), the Provider App ID part of the App ID can be omitted, as the the hardware information is passed through the Pack ID.

In a preferred embodiment of the invention with an Enhanced SL Mechanism, the following information is in addition included:
- Time Zone, which is the BTS time, is used to correlate the type of Event with the time of occurrence of the Event. For example, knowing that most application Events occur at 6pm (peak wireless communication time in Paris) is helpful to the operator to understand the reason of the Events. Another example is that of Events happening at a time of great storm or specific conditions in the network.
- Identity of the mobile phone, e.g. the IMEI in the case of GSM, used for evaluating the correlation between the handset /mobile phone and the Event. For example, application A cannot display text on phone B.
- Cell ID and
- Network Measurement Results (NMR) and Timing Advance (TA) information.
The Cell ID is used for determining the location of the mobile phone, wherein the NMR and TA allow to improve the accuracy of the location calculation.. Correlating Events to their location of occurrence is helpful to determine the reason of the Event. For example, knowing that communication problems of an application systematically happen in one area of town but not in others allows the operator to detect network planning problems.

The combination of time and location information provides for additional correlation means. For example, the operator can detect which sectors of the network are subject to failure under heavy use, if an application systematically fails to work around 6pm in the area of the Eiffel Tower, but not a other times at that place and not at the same time in other places.

The Communication Stream 14 and/or the Communication Frames are preferably generated in form of an SMS message or a series of SMS messages. This is in particular advantageous in case of GSM, EDGE, GPRS and UMTS communication system.

The SL Proxy Server 21 is an optional part of the invention, namely for carrying out an Enhanced SL Mechanism. It will add information to the Communication Stream 14 as described following.

As shown in figure 1 the SL Proxy server 21 is located at a network environment. The network environment generally comprises the wireless network, the core network, gateways and proxies (not shown).

The basic function of the SL Proxy server 21 for the Enhanced SL Mechanism is to enrich the received Communication Stream 14 with user MSISDN. Furthermore it forwards the enriched Communication Stream to the SL App 31 for storage in a Service Level data base (SL database) 32.

In a further preferred embodiment of the invention for providing the enhanced Service Level Mechanism (SL Mechanism) the SL Proxy server 21 detects lost and dropped Communication Frames through the use of the Communication Frame Number which is allocated to Communication Frame 14 by the Federator App 11. The Proxy server 21 transforms these lost and dropped Frames into Events for processing by SL App31.

Also, when the SL Proxy Server 21 receives raw location information, it holds the information received and sends it to a location calculator. When the location, i.e. the mobile phone coordinates, is received from the calculator, the SL Proxy Server 21 replaces the raw location information by the actual location information.

If the Federator App 11 itself retrieves and adds the user identity MSISDN to the Communication Stream, the SL Proxy Server 21 could be omitted and is only used to the further Enhanced SL Mechanism.

As mentioned before, the SL Proxy Server 21 and the SL App 31, which will be described in the following, can be implemented on the same hardware and even in the same application.

As shown in figure 1, the SL App 31 is located at a server or Server Environment 3 respectively. The server 3 comprises the SL App 31 and the SL database 32.

A Pack ID table (PIT) 33 and an Application Events Description Table (AEDT) 34 are used for providing basic information to the SL database 32. The PIT 33 and AEDT 34 shown in figure 1 are not necessarily a part of the server 3. They are used to fill the SL database 23 for a first initialisation or set up of the SL database or for updating the data base information. They might by deleted, when the content of the tables 33, 34 is loaded into the SL data base 32.

In the AEDT table 34 descriptive Event Information are assigned to unique Event Codes. Thus, the AEDT table 34 comprising a column for the unique Event Codes index and a column for description of the Event Codes.

A typical content of the AEDT table 34 has for example the following structure:

| Event Code | Description |
|---|---|
| 305 | SendSMS class 3 NOPACKING returning error 35 |
| 306 | SendSMS class 3 NOPACKING returning error 20 |

The Event Code is an index that permits to transmit only one number (305 or 306) instead of the full description of the Event Information. Different systems of Event Code could be used, for example numeric or alphanumeric codes. The Mobile Application Provider writes for example one AEDT per Mobile Application, which will be used as input to the SL Database 32 for use by the SL App 31.

The PIT 33 describes the subsystem (pack) associated to the version of the Mobile Application. It may comprise the following information:
- MA provider ID, so the Server Provider can correlate the different tables received during a setup phase
- a unique Pack Identifier (Pack ID) for each pack of the mobile application provider,
- a list of Provider App IDs with their description and
- type of media (SIM, J2ME, etc) information.

In the case of SIM media the PIT 33 comprises for example:
- SIM card identification
- SIM Card manufacturer
- SIM Operating System identification
- Date of SIM manufacturing
- Reference to the appropriate electric profile table
- Operator's client for whom the application was developed (name of specific company the operator sells the service to)

In other cases, e.g. BREW®, J2ME®, Windows@ CE applications, the process is the same, with the specificity's of each of these platforms.

The using of the PIT 33 is an Enhanced SL Mechanism. The Operator writes the PIT 33 and needs only one such table.
The SL database 32 is part of the server 2. It comprises the information from the PIT 33 and AEDT 34 and the Event Information transmitted to the SL database as the enriched Communication Stream 14. The SL database 32 is used by the SL App 31 for evaluating the Event Information.

The SL App 31 is part of the server 3 and it is the application in charge of exploiting the Communication Streams in view of the content of the PIT and AEDTs, stored in the SL database 32, through the generation of reports, alerts and statistics.

The resulting alerts, reports and statistics are used by the service provider, Mobile application provider, network operator for improving their product and services.

With respect to a method for providing Event Information of a mobile application over a wireless communication system using a mobile phone, the mobile phone 1 and the server 3 operates as following.

During its execution, the MS App 13 makes calls to the Fed_Store_Event function of the Federator App 11, which populates the Event Database 12 as indicated be the reference number 100.

At specific triggering criteria, as describe before, the Federator App 11 generates a Communication Stream 14 that captures the content of the Event Database 11 and sends it to the SL Proxy Server 21 over a radio communication network 2 via the mobile phone (reference number 200). The Event Database 11 is emptied at that point.

The SL Proxy Server 21 adds the MSISDN of the user to the information included in the Communication Stream 14. The SL Proxy Server 21 forwards the enriched information to the Server Environment 3, which stores it in the SL database 32 (reference number 300).

In a preferred embodiment of the invention, the SL Proxy Server 21 detects and adds information about dropped communication frames to the Communication Stream 14 before forwarding the Communication Stream 14. In a further embodiment of the invention, when the SL Proxy Server 21 receives raw location information, it holds the information received and sends it to a location calculator. When the location (mobile phone coordinates) is received from the calculator, the SL Proxy Server 21 replaces the raw location information by the actual location.

The SL Application 31 generates alerts and reports based on the information in the SL database 32 and potentially completed by network-side Service Level information as provided by the PIT 33 and AEDT 34 (reference number 400). Thus an evaluation of the functionality of the MS app 13 is provided. Based on this information, the Service Providers or mobile application provider can develop or modify their respective hardware, software, services, documentation and marketing strategy in view of the monitored MS App 13 more effectively.

The method of providing Event Information of mobile application via a mobile phone to a server as well as the mobile phone and the server according to the invention has the following advantages:

The usage of the memory of a mobile phone for executing the method according to the invention is minimised. This is achieved by encoding the Event Information in a compressed code as Event Codes and only the Event Code is communicated through the network. The documents describing the Event Codes are communicated during the application setup process. Events are recorded in a database shared by all mobile applications. There is no processing of the Event information, which could be considered as Service Level information, on the mobile phone. Only one application, namely the Federator application, manages the communication with the server.

The execution time spent by mobile applications in the capture of Event information is minimised. When an Event is detected, the only action of the application is to call a function that stores the Event Code in a local database of the mobile phone, and the Federator application manages the sending of Events to the SL application on the server. Only Event codes, not descriptions, are written to the local database.

The network traffic in view of executing the method according to the invention is minimised. Events are described by compressed codes. Only the Federator application sends Event Codes over the network, and only following specific triggering criteria.

The confidentiality of Service Providers is protected, because the access to the definition of Event Information is controlled by the operator and may not even be given to the provider of the software product for the mobile phone for executing the method according to the invention. Only the Event Codes are communicated through the network at runtime.

## Claims

1. Method for providing event information of a mobile application (13), in particular of a mobile application executed on a mobile phone, to a server (3) comprising the steps of:
- generating event information with respect to the mobile application (13) by the respective mobile application (13)
- storing the event information in an event database (12) on the mobile phone (1)
- generating a communication stream (14) comprising event database information, and
- transferring the communication stream (14) to a server (3) over a radio communication and by using the mobile phone (1).

2. Method according to claim 1, **characterised in that**, the event information are generated and stored in the form of event codes.

3. Method according to claim 1 or 2, **characterised in that**, the event database (12) comprises at least the following fields:
- a field for a mobile application identification
- a field for the event codes or event information
- a field for the number of the respective events.

4. Method according to one of the claims 1 to 3, **characterised in that**, the event information or the event codes are stored in the event database (12) by the respective mobile application (13).

5. Method according to one of the claims 1 to 4, **characterised in that**, the event information or the event codes are stored in the event database (12) by a Federator Application (11) of the mobile phone (1).

6. Method according to one of the claims 1 to 5, **characterised in that**, the communication stream (14) comprising event database information is generated by the Federator application (11).

7. Method according to claim 6, **characterised in that**, the Federator Application (11) generates the communication stream (14) in such manner, that the communication stream (14) comprises the content of the event database (12), wherein the event database (12) is emptied after successfully transferring the event database content into the communication stream (14).

8. Method according to one of the claims 1 to 7, **characterised in that**, the Federator Application (11) adds further information to the communication stream (14).

9. Method according to one of the claims 1 to 8, **characterised in that**, a server application (21) adds further information to the communication stream (14).

10. Method according to one of the claims 1 to 9, **characterised in that**, the transferring of the communication stream (14) to the server (3) is performed or caused by the Federator Application (11) and by using the mobile phone (1).

11. Method according to one of the claims 1 to 10, **characterised in that**, the generating and/or transferring of the communication stream (14) is performed in response to specific triggering criteria (15).

12. Method according to claim 11, **characterised in that**, the specific triggering criteria (15) is at least one of the following criteria:
- a request, in particular from the server (3),
- date and/or time information,
- specific error messages and/or
- a specific memory status of the event data base (12).

13. Method according to one of the claims 1 to 12, **characterised in that**, the communication stream (14) is transferred to the server (3) in form of an Short Message Service (SMS).

14. Mobile phone (1) for executing the method according to one of the claims 1 to 13, **characterised in that**, that the mobile phone (1) comprises an event database (12) for storing event information related to events of a mobile application (13) and a Federator Application (11) for handling the event information of the event database (12).

15. Server (3) for executing the method according to one of the claims 1 to 13, **characterised in that**, that the server (3) comprises a server application (21, 31) which co-operates with the Federator Application (11), evaluates the communication stream (14) possibly adding information to the communication stream (14).

16. Communication system for providing event information of a mobile application (13), in particular of a mobile application (13) executed on a mobile phone (1), to a server (3), **characterised in that**, said communication system comprises the mobile phone (1) according to claim 14 and the server (3) according to claim 15.

17. Software program product for executing the method according to one of the claims 1 to 13, **characterised in that**, the software program product comprises the event database (12) and the Federator Application (11).

18. Software program product according to claim 17, **characterised in that**, the software program product is stored on a mobile phone memory.

19. Software program product according to claim 17, **characterised in that**, the software program product is stored on a SIM-card

20. Software program product for executing the method according to one of the claims 1 to 13, **characterised in that**, the software program product comprises a server application (21, 31), which co-operates with the Federator Application (11), evaluates the communication stream (14) possibly adding information to the communication stream (14).
